# EUROPÄISCHE PATENTANMELDUNG

(11) **EP 0 592 837 A2**
(43) Veröffentlichungstag der Anmeldung: **20.04.1994**
(21) Anmeldenummer: 93114970.2
(22) Anmeldetag: 17.09.1993
(51) Int. Cl.: C08J 9/30, C04B 24/28

(54) **Schalldämmender Schaumstoff**

(30) Priorität: 12.10.1992 CH 3186/92
(71) Anmelder: FORBO-GIUBIASCO SA, CH-6512 Giubiasco (CH)
(72) Erfinder: Manso, Elvio, CH-6512 Giubiasco (CH); Pagani, Pierluigi, CH-6600 Locarno (CH); Lindt, Patrick, CH-8193 Eglisau (CH)
(74) Vertreter: Patentanwälte Schaad, Balass & Partner AG

(57) **Zusammenfassung**

Der schalldämmende Schaumstoffkörper besitzt eine mit einem Epoxidharz und einem hydraulischen Bindemittel gebildete Schaumstruktur.

Dieser Schaumstoffkörper wird mit einem Schaum, der durch mechanische Belüftung eines Epoxidharzes hergestellt wird und einer Masse, die Wasser und ein hydraulisches Bindemittel enthält, hergestellt.

## Beschreibung

Die Erfindung betrifft einen schalldämmenden Schaumstoff, ein Verfahren zu dessen Herstellung und dessen Verwendung.

Organische Schaumstoffkörper besitzen gute Schallabsorptionseigenschaften, vermögen jedoch im allgemeinen bezüglich ihrer mechanischen Beanspruchbarkeit und der Witterungsbeständigkeit nicht zu befriedigen.

Aus der DE-C-39 23 284 ist ein anorganischer Schaumstoffkörper aus einem geschäumten und gehärteten Gemisch aus Alkaliwasserglas und Füllstoffen bekannt. Dieser Schaumstoffkörper wird durch Vermischen der Ausgangsmaterialien mit einem chemischen Treibmittel, beispielsweise mit Azodicarbondiamid und Erwärmen des Gemisches auf eine Temperatur im Bereich der Zersetzungstemperatur des Treibmittels hergestellt. Die erhaltenen Schaumstoffkörper weisen eine unregelmässige Struktur auf, in dem offene und geschlossene Zellen sowie Zellen unterschiedlicher Grösse unregelmässig verteilt sind.

Die Verwendung von Azodicarbondiamid als Treibmittel zum Aufschäumen von keramischen Zusammensetzungen ist auch in dr DE-A-1 796 260 beschrieben. Auch hier wird die aufzuschäumende Zusammensetzung auf eine Temperatur im Bereich der Zersetzungstemperatur des chemischen Treibmittels erwärmt. Die Zersetzungstemperatur wird für Azodicarbondiamid mit 200°C angegeben. Die beschriebene Arbeitsweise führt zu einem Schaum mit unregelmässiger Zellenstrucktur. Auch die Herstellung ist problematisch, denn die verhältnismässig hohen Temperaturen erschweren die erforderliche Kontrolle des Schäumvorganges.

Die bekannten anorganischen Schaumstoffkörper besitzen eine unregelmässige geschlossene Zellenstruktur und vermögen weder bezüglich ihren Schallabsorptionseigenschaften noch bezüglich ihrer Witterungsbeständigkeit zu befriedigen.

Ziel der vorliegenden Erfindung ist es deshalb, einen Schaumstoff hauptsächlich auf Basis von anorganischen Materialien vorzuschlagen, der eine regelmässige Zellenstruktur, insbesondere mit offenen Zellen, aufweist und sowohl bezüglich Schallabsorption als auch Witterungsbeständigkeit zu befiedigen vermag.

Dieses Ziel wird mit einem Schaumstoff nach Anspruch 1, der durch das Verfahren gemäss Anspruch 2 erhältlich ist, erreicht. Besonders bevorzugte Ausführungsformen der Erfindung bilden den Gegenstand der Ansprüche 3 bis 14.

Die Erfindung beruht auf der Erkenntnis, dass der mechanisch erzeugte Wasser/Epoxidschaum, d.h. der nur Luft als Schaummittel enthält, seine Schaumstruktur nach Zumischen eines hydraulilschen Bindemittels wie Zement oder Gips über längere Zeit beibehält. Dies ist überraschend, denn bisher mussten Epoxyschäume dieser Art mit Freon oder ähnlichem geschäumt werden. Der mechanisch nur mit Luft erzeugte Schaum von Epoxidharz und Wasser ist neu. Die Stabilität des mechanisch erzeugten Schaumes ist sogar ausreichend lang, um eine Aushärtung des erfindungsgemässen Schaumstoffkörpers bei Umgebungstemperatur, sogenannte Kalthärtung, ohne Beeinträchtigung der offenzelligen Schaumstuktur herbeizuführen. Es wird angenommen, dass bei der erfindungsgemässen Aushärtung das hydraulische Bindemittel in die Schaumlamellen des Epoxidharzes eingelagert und eingebunden wird und dann das Epoxidharz und das hydraulische Bindemittel zu einer Art Verbundmaterial, nämlich dem neuen Schaumstoff, reagieren d.h. aushärten. Entsprechend besitzt der neue Schaumstoff eine neue Kombination von nützlichen Eigenschaften: Regelmässige offene Zellenstruktur mit ausgezeichneter Schallabsorption und Wärmeisolation, sehr gute mechanische Eigenschaften, insbesondere Druckfestigkeit und gute Wetterbeständigkeit.

Die sehr guten mechanischen Eigenschaften erlauben den Einsatz aus dem erfindungsgemässen Schaumstoff gebildeter Formkörper in beliebiger, insbesondere in selbsttragender vertikaler Anordnung.

Es wurde weiterhin gefunden, dass eine horizontale Anordnung von aus dem erfindungsgemässen Schaumstoff gebildeten Formkörpern zwischen den Schienen die Fahrtlärmemissionen von Schienenfahrzeugen erheblich vermindert. Insbesondere eignet sich diese Anordnung für die Schalldämmung bei Hochgeschwindigkeitsbahnen.

Die Struktur und die Eigenschaften des erfindungsgemässen Schaumstoffes kann durch die Zusammensetzung der auszuhärtenden Masse, insbesondere das Verhältnis der Komponente 1 zur Komponente 2, und der übrigen Verfahrensparameter gezielt beeinflusst werden.

Erfindungsgemäss wird als erste Komponente ein Schaum mit Wasser und Epoxidharz durch mechanische Belüftung hergestellt. Wasser wird mit einem hydraulischen Bindemittel und gegebenenfalls weiteren Additiven zu einer flüssigen bis pastenförmige Masse, der zweiten Komponente, verarbeitet. Die erhaltene Masse und der Schaum werden miteinander vermischt und aushärtengelassen. Durch die erfindungsgemässe Vorgehensweise liegt die Mischung der beiden Komponenten bereits zu Beginn der Aushärtungsreaktion in Schaumform vor.

Die Aushärtung wird vorzugsweise bei Raumtemperatur, d.h. ohne externe Wärmezuführung vorgenommen. Während der Aushärtungsreaktion erfolgt eine Erwärmung der Mischung mit Schaumstruktur durch die Hydratationswärme des hydraulischen Bindemittels. Die für die Herbeiführung der Härtungsreaktion geeigneten, bei Raumtemperatur aktiven Härter werden der Mischung von Wasser und Epoxidharz vorzugsweise vor dem Schäumen zugegeben. Wenn eine Beschleunigung der Aushärtungsreaktion oder der Trocknung des ausgehärteten Schaumstoffes gewünscht wird, kann in einem vorbestimmten Zeitpunkt erwärmt werden.

Geeignete Epoxidharze sind beispielsweise jene auf Bisphenol A und Bisphenol F Basis. Diese sind 4,4'-Digllycidyl-diphenyl-1,1-propan und 4,4'-Diglycidyl-diphenyl-1,1-ethan. Als kalthärtende Härter für die obengenannten Epoxidharze kommen Polyaminoamidhärter in Frage. Ein geeignetes Handelsprodukt ist Araldit PY 340, das mit Härter HZ 340 (beide von Ciba-Geigy) härtet.

Vorzugsweise wird ein Schaum (erste Komponente) von einem Litergewicht von bis zu 60 g, in einer Menge von 5 bis 20 Gew.-%, bezogen auf die Gesamtmischung, eingesetzt.

Der auszuhärtenden Masse mit Schaumstruktur können Füllstoffe, wie pulverförmige Holz- und Kunstsstoffabfälle sowie Polypropylenschnitzel, Polystyrolteilchen oder Glashohlkugeln zugesetzt werden. Für bestimmte Verwendungszwecke ist der Zusatz von Verstärkungsfasern, wie Kohle-, Metall- und alkalifeste Glasfaser, vorteilhaft.

Als hydraulische Bindemittel eignen sich insbesondere verschiedene Zementsorten wie Portlandzement, z.B. PZ 325, schnellbindender Zement, z.B. Grenoble/Suisse, verschiedene Gipssorten wie Bau- und Ansetzgips. Die Wahl des hydraulischen Bindemittels erfolgt in Abhängigkeit vom Verwendungszweck des Schaumstoffes. Die flüssige bis pastenförmige Masse (zweite Komponente) wird aus 50 bis 75 Gew.% hydraulischem Bindemittel und 50 bis 25 Gew.-% Wasser, gegebenenfalls unter Zusatz von anorganischen Füllstoffen und weiteren Additiven, hergestellt. Geeignete anorganische Füllstoffe sind Quarzsand, Kaolin, Zirkonoxid, Graphit, Aluminiumhydroxid und pulverisierte Backsteinderivate der Siebfraktion 400 bis 1000 µ in einer Menge von bis zu 15 % bezogen auf die Masse.

Die Mischung der ersten und der zweiten Komponente mit der Schaumstruktur kann in beliebigen Formen ausgehärtet werden. Da keine Wärmezuführung erforderlich ist, kommen auch sehr grosse Formen in Betracht. Um Schaumstoffe mit geschichteter Struktur zu erhalten, können Mischungen unterschiedlicher Zusammensetzung der beiden Komponenten schichtweise in eine Form eingebracht werden. Durch einen gezielten Schichtaufbau kann die Schalldämmung verbessert werden. Die unterste Schicht kann sehr feinzellig und gegebenenfalls geschlossenzellig sein, wodurch eine zusätzliche mechanische Verstärkung erzielt wird. Um eine scharfe Trennung aufeinanderfolgender Schichten zu erzielen, kann ein Thixotropiermittel zugegeben werden. Beide Vorgehensweisen bewirken, dass die entsprechende Schicht nach dem Aushärten eine besonders hohe mechanische Beanspruchbarkeit aufweist. Durch die Zugabe eines Thixotropiermittels lässt sich auch die Zellgrösse steuern.

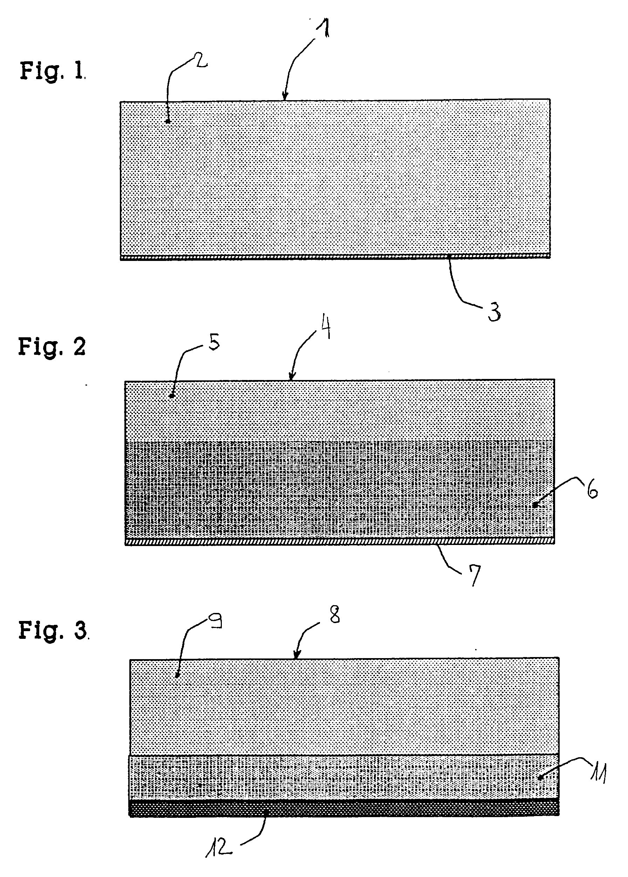

Die Erfindung wird anhand der Figuren weiter veranschaulicht. Die Fig. 1 bis 3 zeigen rein schematisch je einen Schnitt durch drei verschiedene erfindungsgemässe Schaumstoffe.

Der Schaumstoff 1 in Fig. 1 weist eine dicke Schaumschicht 2 mit gleichmässiger Zellenstruktur mit offenen Zellen und eine dünne, etwa 1 bis 2 mm messende Schicht 3 mit kleinen geschlossenen Zellen auf.

Der Schaumstoff 4 in Fig. 2 weist drei Schichten 5, 6, 7 auf. Die oberste Schicht 5, die etwa 1/3 der Schaumstoffdicke ausmacht, besitzt eine Struktur wie die Schaumschicht 2 in Fig. 1. Die folgende Schaumschicht 6 besitzt kleinere Zellen als die darüberliegende Schaumschicht 5 und etwa deren doppelte Dicke. Die dritte und unterste Schicht 6 entspricht der unteren Schicht 3 in Fig. 1.

Der Schaumstoff 8 in Fig. 3 besitzt drei aufeinanderfolgende Schichten 9, 11, 12. Die Dicke der obersten Schaumschicht 9 mit feinen offenen Zellen verhält sich zur Dicke der mittleren Schaumschicht 11 mit feinsten offenen Zellen wie 2 : 3. Die unterste Schicht 12 mit feinen geschlossenen Zellen besitzt etwa 1/3 der Dicke der mittleren Schaumschicht 11.

Die Variation der Zellgrösse wird durch das Verhältnis der beiden Mischungskomponenten bestimmt und wird durch Vorversuche für den jeweiligen Verwendungszweck ermittelt. Je grösser der Anteil an Epoxidharz umso gösser sind die Zellen der Schaumstruktur und umso kleiner ist die Dichte des Schaumstoffes.

Die erfindungdgemässen Schaumstoffe sind einfärbbar, können einen vor dem Einsatz entfernbaren Schutzüberzug aufweisen, können eingebettete Befestigungselemente und dgl. enthalten oder mit einer wasserabstossenden oder die Druckfestigkeit erhöhenden Ausrüstung versehen sein. Formkörper aus dem erfindungsgemässen Schaumstoff können spanabhebend bearbeitet und so dem jeweiligen Zweck angepasst werden.

Die erfindungsgemässen Schaumstoffe sind schallabsorbierend, wärmedämmend und nicht brennbar. Da ihr Anteil an biologisch nicht-abbaubaren organischen Stoffen weniger als 3% beträgt, sind sie deponierbar, d.h. umweltfreundlich. Durch Granulieren sind sie als Füllstoffe recyclierbar.

Überraschenderweise wurde gefunden, dass erfindungsgemässe Schaumstoffkörper, die horizontal zwischen den Schienen von Transportanlagen verlegt wurden, besonders wirksam bei der Schalldämmung sind. Der entsprechende Einsatz ist insbesondere bei Hochgeschwindigkeitsbahnen vorteilhaft.

Selbstverständlich eignen sich die erfindungsgemässen Schaumstoffkörper für eine vertikale Anwendung.

Die Erfindung wird durch die nachfolgenden Beispiele weiter veranschaulicht:

### Beispiel 1

5'040 g Portlandzement 325 (63 Gew.-%) werden mit 1'432 g Wasser (17,9 Gew.-%) vermischt. Der erhaltenen pastösen grauen Zementmasse werden unter Rühren 1'520 g (19 Gew.-%) eines durch mechanisches Belüften erzeugten Schaumes aus Wasser/Epoxidharz (Litergewicht = 30 bis 34 g) zugemischt. Zuletzt erfolgt langsam unter Rühren die Zugabe von 8 g (0,1 Gew.-%) Polypropylenfaserschnitzel. Die erhaltene schaumförmige Masse wird in eine mit einem Trennmittel versehenen dichten Form gegeben. Die Härtung erfolgt während mindestens 3 Tagen bei Raumtemperatur (20 bis 30°C) in feuchter Umgebung und geschlossener Form.

Nach dieser ersten Härtungsphase wird die Form geöffnet und der Schaumstoffkörper während mindestens 14 Tagen weiter in feuchter Umgebung verfestigt.

Nach Entfernen der allfälligen unerwünschten Boden- und Oberflächenkruste wird dieser Schaumstoffkörper mit einer Zubereitung aus 2'000 g Wasser, 1'000 g eines mit einem Elastomer modifizierten Kaliumsilikats und 1'000 g eines mit einem Hydrophobierungsmittel modifizierten Alkalimetallsilikats imprägniert und in einem Umluftofen während 12 bis 14 Stunden bei ca. 70°C getrocknet. Diese Imprägnierung ergibt eine Hydrophobierung und eine Verbesserung der Druckfestigkeit.

Der erhaltene Schaumstoffkörper 400x400x95-100 mm (siehe Fig. 1) hat die folgenden Eigenschaften ergeben:

| | |
|---|---|
| Dichte (380 kg/m³ nach 60 Tagen Raumtemperatur) | 420-440 kg/m³ |
| Druckfestigkeit (28 Tage nach der Herstellung: Anfangswert) | 0,27±0,03 MPa |
| Druckfestigkeit (nach 4 Wochen Aussenbewitterung) | 0,34±0,07 MPa |
| Druckfestigkeit (nach 8 Wochen Aussenbewitterung) | 0,37±0,06 MPa |

Die Druckfestigkeit wurde nach SIA-Norm 215-1978 an 40x40x40 mm Probekörpern gemessen. Die Aussenbewitterung wurde zwischen Winter und Frühling durchgeführt und die tägliche Exposition der Schaumstoffkörper wurde in 6 Tageszyklen à 4 Stunden eingeteilt, wovon man jeweils in der letzten Stunde mit Leitungswasser berieselte.

### Beispiel 2

Ein Schaumstoffkörper wird nach der Vorgehensweise von Beispiel 1, jedoch ohne Silikatimprägnierung, mit folgender Zusammensetzung hergestellt:

| | |
|---|---|
| 21'000 g Portlandzement 325 | 70,0 Gew.-% |
| 6'270 g Wasser | 20,9 Gew.-% |
| 2'700 g Wasser/Epoxidharzschaum | 9,0 Gew.-% |
| 30 g Polypropylenfaserschnitzel | 0,1 Gew.-% |

Nach der ersten dreitägigen Härtungsdauer lässt man den Schaumstoffkörper drei Wochen lang bei Raumtemperatur und feuchter Umgebung weiter aushärten. Nach einer zusätzlichen einwöchigen Raumtemperaturtrocknung wird die Schaumplatte (Fig. 2) 540x540x110 mm getestet.

| | |
|---|---|
| Dichte | 820-840 kg/m³ (750 kg/m³ nach 60 Tagen Raumtemperatur) |

| | nach 28 Tagen Raumtemperatur |
|---|---|
| Druckfestigkeit Zone 5 | 0,6±0,015 MPa |
| Druckfestigkeit Zone 6 | 1,05±0,13 MPa |

| | nach 50 Frostzyklen |
|---|---|
| Druckfestigkeit Zone 5 | 0,651±0,09 MPa |
| Druckfestigkeit Zone 6 | 1,12±0,18 MPa |
| Schallabsorptionsgrad α (85 mm starke Platte) | 50 bis 70% zwischen 400 und 2500 Herz |

Der Schallabsorptionsgrad α wurde nach DIN-Norm 52215 gemessen. Zur Bestimmung der Frostbeständigkeit wurde der Schaumstoffkörper einer Prüfung mit 3 Tageszyklen unterworfen:
1) 1 Stunde in Wasser 15-20°C eingetaucht + 2,5 Stunden bei -18°C.
2) 1 Stunde in Wasser 15-20°C eingetaucht + 4,0 Stunden bei -18°C.
3) 1 Stunde in Wasser 15-20°C eingetaucht + 14,5 Stunden bei -18°C.

### Beispiel 3

Erfindungsgemässe Schaumstoffkörper mit besonders guter Schallabsorption wurden mit folgender Zusammensetzung hergestellt und nacheinander in die Form gegossen:

| **Formulierung A)** | |
|---|---|
| 7'206,1 g Portlandzement 325 | 68,63 Gew.-% |
| 2'338,4 g Wasser | 22,27 Gew.-% |
| 945,0 g Wasser/Epoxidharzschaum | 9,00 Gew.-% |
| 10,5 g Polypropylenfaserschnitzel | 0,10 Gew.-% |

| **Formulierung B)** | |
|---|---|
| 11'281,2 g Portlandzement 325 | 66,36 Gew.-% |
| 3'661,8 g Wasser | 21,54 Gew.-% |
| 2'040,0 g Wasser/Epoxidharzschaum | 12,00 Gew.-% |
| 17,0 g Polypropylenfaserschnitzel | 0,10 Gew.-% |

Der erhaltene Schaumstoffkörper (Fig. 3) 540x540x120 mm zeigt sowohl in der Dicke von 85 mm als auch 120 mm einen hervorragenden Schallabsorptionsgrad α von durchschnittlich 90% zwischen 400 und 2500 Herz.

### Beispiel 4

Ein Schaumstoff wird nach der Vorgehensweise von Beispiel 1 mit folgender Zusammensetzung hergestellt:

| | |
|---|---|
| 2'320 Gew.-Teile Wasser | 29 Gew.-% |
| 2'320 Gew.-Teile Ansetzgips | 29 Gew.-% |
| 2'320 Gew.-Teile Baugips | 29 Gew.-% |
| 800 Gew.-Teile Wasser/Epoxidschaum | 10 Gew.-% |
| 240 Gew.-Teile Zucker | 3 Gew.-% |

Nach einer 16-stündigen Härtungsdauer bei Raumtemperatur wird man den Schaumstoffkörper entweder weitere 6 bis 8 Stunden bei 110 bis 120°C oder 2 bis 3 Wochen bei 25 bis 30°C trocknen. Nach Entfernen der allfälligen unerwünschten Oberflächenkruste wird auch der Schaumstoff mit einer ersten Zubereitung aus 1'500 g Wasser und 1'500 g eines elastomermodifiziertem K-Silikats und einer zweiten Zubereitung aus 2'000 g Wasser und 1'000 g eines hydrophobisierten Alkalimetallsilikats "Nass in Nass" imprägniert.

Anschliessend wird der Schaumstoffkörper in einem Umluftofen z.B. 6 bis 8 Stunden bei 110 bis 130°C oder 12 bis 16 Stunden bei 70°C getrocknet.

Der erhaltene Schaumstoffkörper 250x350x110 mm (siehe Fig. 1) hat die folgenden Eigenschaften ergeben:

| | |
|---|---|
| Dichte: | 440 - 480 kg/m³ |
| Druckfestigkeit: | 0,143 ± 0,04 MPa |

## Patentansprüche

1. Schalldämmender Schaumstoffkörper, gekennzeichnet durch eine mit einem Epoxidharz und einem hyraulischen Bindemittel gebildete Schaumstruktur.

2. Verfahren zur Herstellung eines schalldämmenden Schaumstoffkörpers, dadurch gekennzeichnet, dass man einen mit Wasser und einem Epoxidharz durch mechanische Belüftung gebildeten Schaum als erste Komponente und eine Wasser und ein hydraulisches Bindemittel enthaltende flüssige bis pastenförmige Masse als zweite Komponente herstellt, die erste und die zweite Komponente miteinander mischt und die erhaltene bindemittelhaltige Mischung mit Schaumstruktur aushärten lässt.

3. Verfahren nach Anspruch 2, dadurch gekennzeichnet, dass man die Mischung mit Schaumstruktur bei Umgebungstemperatur aushärten lässt.

4. Verfahren nach einem der Ansprüche 2 oder 3, dadurch gekennzeichnet, dass man die Mischung mit Schaumstruktur oberhalb von 15°C aushärten lässt.

5. Verfahren nach einem der Ansprüche 2 bis 4, dadurch gekennzeichnet, dass man die Mischung mit Schaumstruktur in einer zweiten Phase unter Wärmeeinwirkung aushärten lässt.

6. Verfahren nach einem der Ansprüche 2 bis 5, dadurch gekennzeichnet, dass man die Mischung mit Schaumstruktur in Gegenwart eines kalthärtenden Härters aushärten lässt.

7. Verfahren nach einem der Ansprüche 2 bis 6, dadurch gekennzeichnet, dass man einen Schaumstoff mit mehreren Schichten mit unterschiedlichem Mischungsverhältnis der beiden Komponenten in den einzelnen Schichten aushärten lässt.

8. Schaumstoff auf Basis eines mechanisch belüfteten Epoxidharzschaumes und eines hydraulischen Bindemittels, erhältlich nach dem Verfahren nach einem der Ansprüche 2 bis 7.

9. Schaumstoff nach Anspruch 8, dadurch gekennzeichnet, dass er einen Schaum mit gleichmässiger offener Zellenstruktur aufweist.

10. Schaumstoff nach Anspruch 8 oder 9, dadurch gekennzeichnet, dass er mehrere Schichten mit Schaumstruktur aufweist, wobei aufeinanderfolgende Schichten eine unterschiedliche Zellengrösse aufweisen.

11. Schaumstoff nach einem der Ansprüche 8 bis 10, dadurch gekennzeichnet, dass er eine Aussenschicht ohne Schaumstruktur oder mit sehr kleinen geschlossenen Zellen aufweist.

12. Schaumstoff nach einem der Ansprüche 8 bis 11, dadurch gekennzeichnet, dass er zum Verlegen zwischen den Schienen von Transporteinrichtungen bestimmt ist.

13. Verwendung des Schaumstoffes nach einem der Ansprüche 8 bis 12 in granulierter Form als Füllstoff.

14. Verwendung des Schaumstoffes nach einem der Ansprüche 8 bis 12 zur Schalldämmung zwischen den Schienen von Transportanlagen, insbesondere in horizontaler Anordnung.

15. Verwendung des Schaumstoffes nach einem der Ansprüche 8 bis 12 zur Schalldämmung und Wärmeisolation, insbesondere in brandgefährdeter Umgebung.

16. Mechanisch erzeugter Schaum auf Epoxidharz-/Wasserbasis, der Luft als Schaummittel enthält.
